# FASCICULE DE BREVET EUROPEEN

(11) **EP 1 943 197 B1**
(45) Date de publication et mention de la délivrance du brevet: **29.03.2017**
(21) Numéro de dépôt: 06831277.6
(22) Date de dépôt: 23.10.2006
(51) Int. Cl.: C03C 23/00, C03C 17/34, C03C 17/36, C03C 17/38

(54) **PROCEDE DE TRAITEMENT D'UN SUBSTRAT**
SUBSTRATVERARBEITUNGSVERFAHREN
SUBSTRATE PROCESSING METHOD

(30) Priorité: 25.10.2005 FR 0553243
(43) Date de publication de la demande: 16.07.2008
(73) Titulaire: SAINT-GOBAIN GLASS FRANCE, 92400 Courbevoie (FR)
(72) Inventeur: NADAUD, Nicolas, F-75013 PARIS (FR); ROCHE, Stéphanie, F-75012 Paris (FR); SCHMIDT, Uwe, 04895 Falkenberg (DE); LOERGEN, Marcus, 15738 Zeuthen (DE)
(74) Mandataire: Saint-Gobain Recherche
(86) Numéro de dépôt international: PCT/FR2006/051082
(87) Numéro de publication internationale: WO 2007/048963

(56) Documents cités:
- FR-A- 2 859 721
- FR-A- 2 861 385
- FR-A- 2 865 420
- PATENT ABSTRACTS OF JAPAN vol. 2000, no. 14, 5 mars 2001 (2001-03-05) -& JP 2000 308846 A (TOPPAN PRINTING CO LTD), 7 novembre 2000 (2000-11-07)

## Description

La présente invention est relative à un procédé de traitement de surface d'un substrat. Elle vise plus particulièrement les procédés de traitement destinés à être intégrés au sein d'installations pour le dépôt de couches fonctionnant sous vide, ces installations ayant une taille industrielle (substrat dont la dimension perpendiculaire au sens de déplacement est supérieure à 1,5 m, voire à 2 m). Plus particulièrement encore, elle vise un procédé de traitement de surface qui associe un procédé de dépôt de couches minces (classiquement une ligne de dépôt de pulvérisation cathodique éventuellement assistée par magnétron) et un procédé de traitement de surface de ces couches minces à l'aide d'une source ionique linéaire.

Bien entendu, elle vise également les substrats ainsi traités et revêtus d'un empilement de couches de différentes fonctionnalités (contrôle solaire, bas-émissifs, blindage électromagnétique, chauffant, hydrophile, hydrophobe, photocatalytique), couches modifiant le niveau de réflexion dans le visible (couches anti-reflet ou miroir) incorporant un système actif (électrochromes, électroluminescentes, photovoltaïques).

Typiquement, les empilements de couches minces déposés sur substrat à fonction verrière comporte un nombre croissant de couches minces, ce qui augmente d'autant le nombre d'interfaces entre chaque couche. Chaque interface séparant deux films de matériaux différents constitue des zones dont le contrôle est essentiel aux caractéristiques optiques, thermiques et mécaniques de l'ensemble de l'empilement.

Ainsi, il est par exemple bien connu que la résistance au pelage d'un empilement de couches minces est conditionnée à l'énergie des liaisons (chimiques, coulombiennes, Van Der Walls, hydrogène etc....) au niveau des interfaces. De même, les contraintes interfaciales, résultantes des contraintes de volume des différentes couches, peuvent être également des moteurs de rupture d'interface, occasionnant la délamination du revêtement à l'interface la plus sollicitée ou présentant l'énergie d'adhésion la plus faible.

On sait aussi qu'un deuxième paramètre caractérisant l'interface est sa capacité à modifier l'aptitude à cristalliser ou au moins à assurer un ordre à moyenne distance de la couche supérieure. Cette influence est bien évidemment utilisée, par exemple dans l'industrie microélectronique, pour promouvoir la croissance quasi monocristalline ou l'orientation préférentielle des grains au sein de films minces nanocristallins à l'aide d'un substrat de caractéristiques cristallographiques adéquates. Cette technique est appelée généralement "croissance épitaxiale" et, plus précisément, hétéro-épitaxiale dans le cas où les matériaux inférieur et supérieur sont différents.

Les caractéristiques cristallographiques et la morphologie granulaire des couches minces conditionnent donc les fonctionnalités apportées par les empilements déposés sur les substrats à fonction verrière.

Ainsi selon un premier exemple non limitatif, dans le cas d'un empilement à fonctionnalité autonettoyante obtenue par le dépôt d'une couche mince ayant des propriétés photocatalytiques (notamment à base d'oxyde de titane), les performances de cette dernière sont liées à la quantité de phase d'oxyde de titane anatase contenue dans la couche fonctionnelle.

A titre de deuxième exemple, les performances des empilements à fonctionnalité contrôle solaire ou à fonctionnalité d'isolation thermique renforcée (communément appelés Low-E) sont liées à la capacité qu'a la couche métallique fonctionnelle de présenter un état de cristallisation favorable à la réflexion du rayonnement de longueur d'onde supérieure à la longueur d'onde de la couche fonctionnelle qui peut être par exemple en argent, cet état de cristallisation favorable étant très dépendant de l'état d'arrangement cristallographique des atomes formant la couche ou les couches déposées chronologiquement avant la couche fonctionnelle. Le document FR 2 865 420 décrit un procédé de nettoyage d'un substrat verrier à l'aide d'une source ionique.

Plus généralement une structure d'empilement de couches minces déposée à l'aide d'une ligne de dépôt de pulvérisation cathodique comprend au moins une couche B dite fonctionnelle déposée sur au moins une couche A.

Au sens de l'invention, on définit une couche A comme au moins une couche pouvant être une superposition d'une pluralité de couches Ai (A₁, A₂, A₃, Aₙ ; avec i compris entre 1 et n, et n supérieur ou égal à 1)

Les performances optimales de l'empilement sont atteintes lorsque chacune des couches élémentaires Ai est exempte le plus possible de toute contamination (par exemple des molécules de gaz adsorbées) et dispose d'un état de surface le plus lisse possible ainsi qu'un arrangement de matière optimal (faible densité de défauts cristallins de type maille ou dislocations...).

Les inventeurs ont constaté malheureusement, que malgré le soin apporté aux étapes de dépôt, la surface de chacune des couches Ai peut être :
(i) contaminée par l'atmosphère résiduelle (eau, hydrocarbure) du dispositif de dépôt (magnétron) lors du transfert de la couche A entre deux chambres de dépôt, munies chacune de leur propre cathode
(ii) que la surface d'une couche A déposée par pulvérisation magnétron ne constitue pas toujours une surface idéale pour assurer le dépôt d'une couche B car elle présente, pour certains matériaux notamment, une certaine rugosité dépendante de la nature du matériau déposé, de l'épaisseur de la couche et des conditions de dépôt de cette dernière.
(iii) qu'elle constitue un milieu cristallographiquement perturbé.

La présente invention se propose de pallier les inconvénients précédemment mentionnés en proposant un procédé de traitement de surface d'au moins une portion de surface d'une couche A située au sein d'une structure d'empilement de couches minces A/B.

A cet effet, le procédé de traitement de surface d'au moins une portion de surface d'au moins une couche A située entre un substrat et une couche B d'un empilement de couches minces déposées sous vide sur un substrat en verre ou en matière plastique, selon l'invention, se caractérise en ce que :
- on procède au dépôt d'au moins une couche mince A au niveau d'une portion de surface dudit substrat, cette phase de dépôt étant réalisée par un procédé de dépôt sous vide
- on génère, à l'aide d'au moins une source ionique linéaire, un plasma d'espèces ionisées à partir d'un gaz ou d'un mélange gazeux,
- on soumet au moins une portion de surface de la couche A audit plasma afin que ladite espèce ionisée modifie au moins partiellement l'état de surface de la couche A, de manière à modifier la cristallisation et/ou la morphologie granulaire de la couche B déposée ensuite, dans ledit empilement, au dessus de la couche A,
- on procède au dépôt d'au moins une couche B au niveau d'une portion de surface de la couche A, cette phase de dépôt étant réalisée par un procédé de dépôt sous vide.

Grâce à ces dispositions, il est possible de modifier substantiellement la nature de la surface de A, cette modification ayant un impact sur la cristallisation et/ou la morphologie granulaire de la couche de type B déposée sur la couche A et ce au sein d'une installation de dépôt de couches minces, cette installation étant de taille industrielle et fonctionnant sous vide.

Dans des modes de réalisation préférés de l'invention, on peut éventuellement avoir recours en outre à l'une et/ou à l'autre des dispositions suivantes :
- on positionne la source ionique linéaire dans le même compartiment contenant le dispositif de dépôt sous vide permettant le dépôt de la couche A,
- la couche A comporte une pluralité de couches Ai superposées et en ce que l'on soumet au moins l'une des couches Ai (avec i compris entre 1 et n, et n> 1) audit plasma
- le traitement de surface est réalisé par une ou plusieurs sources ioniques linéaires situées les unes à la suite des autres,
- il est réalisé par une technique de type sputter up and down.
- on positionne la source ionique linéaire dans un compartiment isolé de celui contenant le dispositif de dépôt sous vide permettant le dépôt de la couche A,
- on positionne la source ionique linéaire selon un angle compris entre 30° et 90° par rapport au plan du substrat,
- le procédé de dépôt consiste en un procédé de pulvérisation cathodique, notamment assistée par champ magnétique,
- le procédé de dépôt sous vide consiste en un procédé à base de PE-CVD (Plasma Enhanced Chemical Vapor Déposition),
- on procède à une mise en mouvement relatif entre la source ionique et le substrat,
- on utilise un plasma gazeux à base d'argon ou d'un quelconque gaz neutre, d'oxygène, ou d'azote,
- la source ionique linéaire génère un faisceau collimaté d'ions d'énergie comprise entre 0,05 et 2,5 keV, préférentiellement comprise entre 1 et 2 keV ,

Selon un autre aspect de l'invention, celle-ci concerne également des substrats, notamment verriers, dont au moins une portion de surface est recouverte d'un empilement de couches minces de différentes fonctionnalités (contrôle solaire, bas-émissifs, blindage électromagnétique, chauffant, hydrophobe, hydrophile, photocatalytique), couches modifiant le niveau de réflexion dans le visible (couches anti-reflet, miroir) ou incorporant un système actif (électrochromes, électroluminescentes photovoltaïques), l'une au moins des couches minces Ai située sous B ayant été traitée par le procédé précédemment décrit.

D'autres caractéristiques et avantages de l'invention apparaîtront au cours de la description suivante, donnée à titre d'exemple non limitatif.

Selon un mode préféré de mise en oeuvre du procédé objet de l'invention, celui-ci consiste à insérer au sein d'une ligne, de taille industrielle, pour le dépôt de couches minces sur un substrat, par pulvérisation cathodique, notamment assistée par champ magnétique, et notamment réactive en présence d'oxygène et/ou d'azote, au moins une source ionique linéaire.

Le dépôt des couches minces peut être également effectué par un procédé à base de CVD (Chemical Vapor Déposition) ou de PECVD (Plasma Enhanced Chemical Vapor Déposition) qui est bien connu de l'homme du métier, dont un exemple de mise en oeuvre est illustré par le document EP0149408.

Au sens de l'invention, on entend par taille industrielle, une ligne de production dont la taille est adaptée d'une part, pour fonctionner de manière continue et d'autre part, pour traiter des substrats dont l'une des dimensions caractéristiques, par exemple la largeur perpendiculaire au sens de circulation du substrat, est d'au moins 1,5 m.

Le montage de la source ionique linéaire peut être réalisé soit en lieu d'une cathode, soit au niveau d'un sas de liaison entre deux chambres de dépôt, soit plus généralement au niveau d'une enceinte appartenant à une ligne de dépôt, qui est soumise à un vide de type secondaire (par exemple de l'ordre de 1.10⁻⁵ mbar).
- Il est possible d'intégrer plusieurs sources au sein d'une ligne de production, les sources pouvant opérer sur la même face d'un substrat ou sur chacune des faces d'un substrat (ligne de sputtering up and down par exemple ou verticale), de manière simultanée ou consécutive et pouvant présenter chacune leur propre mode de réglage. Un traitement est dit sputter up and down quand il est réalisé de façon à ce que le faisceau d'ions est dirigé verticalement ou vers le haut ou vers le bas.

On utilise au moins une source ionique linéaire dont le principe de fonctionnement est le suivant :
La source ionique linéaire comporte très schématiquement une anode, une cathode, un dispositif magnétique, une source d'introduction de gaz. Des exemples de ce type de source sont décrits notamment dans RU2030807, US6002208, ou WO02/093987. L'anode est portée à un potentiel positif par une alimentation continue, la différence de potentiel entre l'anode et la cathode provoque l'ionisation d'un gaz injecté à proximité.

Le plasma de gaz est alors soumis à un champ magnétique (généré par des aimants permanents ou non permanents), ce qui permet d'accélérer et de focaliser le faisceau d'ions.

Les ions sont donc collimatés et accélérés vers l'extérieur de la source, et leur intensité est notamment fonction de la géométrie de la source, du débit gazeux, de leur nature, et de la tension appliquée à l'anode.

En l'espèce selon le procédé objet de l'invention, la source ionique linéaire fonctionne en mode collimaté, avec un mélange de gaz comportant de l'oxygène, de l'argon, de l'azote et éventuellement un gaz neutre, comme par exemple aussi le néon, l'hélium en tant que composant minoritaire.

On utilise préférentiellement un gaz dont la nature chimique est adaptée au type de couche que l'on veut traiter. On utilisera préférentiellement un gaz neutre, notamment à base d'argon, de krypton, de xénon, afin d'éviter toutes réactions chimiques avec ladite surface. Ce qui n'est pas le cas pour des applications du type nettoyage du substrat pour lesquelles on privilégiera les gaz présentant un pouvoir oxydant significatif à l'état ionisé (notamment l'oxygène).

A titre d'exemple non limitatif, l'oxygène est introduit avec un débit de 150 sccm, sous une tension entre les électrodes de 3 kV et une intensité électrique de 1,8 A d'où une puissance consommée de 5400 W. (ces données sont relatives à une source de 1 m de long).

Cette source est positionnée, au niveau de l'enceinte et dans les conditions évoquées précédemment, de telle sorte que le plasma collimaté contenant les espèces ionisées atteigne au moins une portion de surface d'une couche mince A préalablement déposée par une technique de dépôt sous vide sur une portion de substrat à fonction verrière en mouvement dans l'enceinte de traitement.

On peut donc sur une portion de surface d'une couche A située sur l'une des faces du substrat ou sur les deux faces d'un même substrat (si on dispose de plusieurs sources ioniques)
- traiter la surface de la couche A qui sera recouverte par la suite par une technique de dépôt sous vide d'une couche B, cette couche B présentant alors un contrôle de sa cristallisation et/ou de sa morphologie granulaire ou plus généralement l'une quelconque de l'une des couches Ai d'un empilement de couches (A₁, A₂, A₃, ...Aₙ), qui sera recouverte par une couche fonctionnelle B.

Le substrat et sa structure d'empilement de couches minces ainsi traitée se présentent sous la forme de plaque de verre, éventuellement bombé, et possèdent des dimensions « industrielles ». Au sens de l'invention, on entend par industrielles, les dimensions caractéristiques d'une plaque de verre communément appelées PLF (Pleine Largeur Float) ou DLF (Demi Largeur Float), soit respectivement supérieure à 3 m de large, supérieure à 2 m de large.

Les substrats et leur empilement ainsi traités peuvent poursuivre, sans rupture du vide, (c'est à dire que les substrats demeurent au sein de l'installation de dépôt sous vide) leur cheminement à l'intérieur d'une enceinte adaptée pour le dépôt de couches minces par des procédés connus de diverses technologies « PECVD », « CVD » (Chemical Vapor Deposition), pulvérisation magnétron, ou encore du type « Ion Plating », « Ion Beam Sputtering », « Dual Ion Beam Sputtering ».

Des substrats, préférentiellement transparents, plats ou bombés, en verre ou en matière plastique (PMMA, PC...), peuvent être revêtus au sein d'une installation de dépôt sous vide telle que précédemment mentionnée d'au moins un empilement de couches minces conférant audit substrat des fonctionnalités telles que définies ci-après par exemple.

Ainsi, selon un premier mode de réalisation, le substrat comporte un revêtement de type « isolation thermique renforcée » ou Low E (bas émissif).

Ce revêtement est constitué d'au moins une séquence d'au moins cinq couches successives à savoir une première couche à base d'oxyde métallique ou semi-conducteur choisie notamment parmi l'oxyde d'étain ou l'oxyde de titane, l'oxyde de zinc (selon une épaisseur comprise entre 10 et 30 nm), une couche d'oxyde métallique ou semi-conducteur notamment à base d'oxyde de zinc ou d'oxyde de titane, déposée sur la première couche (selon une épaisseur comprise entre 5 et 20 nm), une couche d'argent (selon une épaisseur comprise entre 5 et 12 nm), une couche métallique choisie notamment parmi le nickel chrome, le titane, le niobium, le zirconium, ladite couche métallique étant éventuellement nitrurée (selon une épaisseur inférieure à 5 nm) déposée sur la couche d'argent et au moins une couche supérieure (selon une épaisseur comprise entre 5 et 40 nm) comprenant un oxyde métallique choisi notamment parmi l'oxyde d'étain, l'oxyde de titane, l'oxyde de zinc déposée sur cette couche métallique, cette couche supérieure (éventuellement constituée d'une pluralité de couches) étant éventuellement revêtue d'une couche de protection dite « overcoat »

Ainsi, selon un deuxième mode de réalisation, le substrat comporte un revêtement de type « isolation thermique renforcée » ou Low E, ou de contrôle solaire, adapté pour subir des traitements thermiques (de type trempe), ou des revêtements conçus pour des applications spécifiques à l'automobile (également adapté pour subir des traitements thermiques).

Ce revêtement est constitué d'un empilement de couches minces comportant une alternance de n couches fonctionnelles B à propriétés de réflexion dans l'infrarouge et/ou dans le rayonnement solaire, à base notamment d'argent (selon une épaisseur comprise entre 5 et 15 nm), et de (n + 1) revêtements A avec n ≥ 1, lesdits revêtements A comportant une ou une superposition de couches en matériau diélectrique à base notamment de nitrure de silicium (selon une épaisseur comprise entre 5 et 80 nm), ou d'un mélange de silicium et d'aluminium, ou d'oxynitrure de silicium, ou d'oxyde de zinc (selon une épaisseur comprise entre 5 et 20 nm), de manière à ce que chaque couche fonctionnelle B soit disposée entre deux revêtements A, l'empilement comprenant également des couches absorbantes dans le visible, notamment à base de titane, de nickel chrome, de zirconium, éventuellement nitrurées, situées au dessus et/ou en dessous de la couche fonctionnelle.

Ainsi, selon un troisième mode de réalisation, le substrat comporte un revêtement de type contrôle solaire.

Le substrat est muni d'un empilement de couches minces comportant une alternance de (n) couche(s) fonctionnelle(s) à propriétés de réflexion dans l'infrarouge et/ou dans le rayonnement solaire, notamment de nature essentiellement métallique, et de (n + 1) « revêtements », avec n ≥ 1, ledit empilement étant composé d'une part, d'une ou d'une pluralité de couches dont au moins une en matériau diélectrique notamment à base d'oxyde d'étain (selon une épaisseur comprise entre 20 et 80 nm), de oxyde de zinc, ou métallique, du nickel chrome (selon une épaisseur comprise entre 2 et 30 nm), et d'autre part d'au moins une couche fonctionnelle (selon une épaisseur comprise entre 5 et 30 nm) en argent, ou en alliage métallique comportant de l'argent, la (chaque) couche fonctionnelle étant disposée entre deux couches en diélectrique.

Ainsi, selon un quatrième mode de réalisation, le substrat comporte un revêtement de type contrôle solaire, adapté pour subir un traitement thermique (de type trempe par exemple).

Il s'agit d'un empilement de couches minces comportant au moins une séquence d'au moins cinq couches successives à savoir une première couche notamment à base de nitrure de silicium (selon une épaisseur comprise entre 20 et 60 nm), une couche en métal notamment à base de nickel chrome ou de titane (selon une épaisseur inférieure à 10 nm) déposée sur la première couche, une couche fonctionnelle à propriétés de réflexion dans l'infrarouge et/ou dans le rayonnement solaire notamment à base d'argent (selon une épaisseur inférieure à 10 nm), une couche métallique choisie notamment parmi le titane, le niobium, le zirconium, le nickel chrome (selon une épaisseur inférieure à 10 nm) déposée sur la couche d'argent et une couche supérieure à base de nitrure de silicium (selon une épaisseur comprise entre 20 et 60 nm) déposée sur cette couche métallique.

A titre d'exemple de substrat revêtu d'un empilement Low E, on donne ci-après :
Exemple 1 : substrat/SnO_{2/}TiO₂/ZnO/Ag/NiCr/ZnO/Si₃N_{4/}TiO₂
Exemple 2 : substrat/SnO₂/ZnO/Ag/NiCr/ZnO/Si₃N₄/TiO₂

Dans les exemples 1 et 2, la couche B comprend de l'argent, les couches A sont l'une au moins des autres couches de l'empilement situées en dessous de la couche B.

En variante des exemples 1 et 2, et selon un deuxième mode de réalisation, le substrat comporte un revêtement de type « isolation thermique renforcée » ou Low E, ou de contrôle solaire, adapté pour subir des traitements thermiques (de type trempe), ou des revêtements conçus pour des applications spécifiques à l'automobile (également adaptés pour subir des traitements thermiques).

On donne par exemple les exemples 3 et 4 ci-dessous qui sont adaptés pour subir des traitements thermiques.
Exemple 3 : Substrat/Si₃N₄/ZnO/NiCr/Ag/ZnO/Si₃N₄
Exemple 4 : Substrat/Si₃N₄/ZnO/Ti/Ag/ZnO/Si₃N₄/ZnO/Ti/ Ag/ZnO/ Si₃N₄ /TiO₂.

Dans les exemples 3 et 4, la couche B comprend de l'argent, les couches A sont les autres couches de l'empilement situées en dessous de la couche B.

Les conditions de dépôt des empilements faisant l'objet des exemples 1 à 4 sont les suivantes :
- couche de Si₃N₄ à partir d'une cible Si:Al, avec une alimentation en mode pulsé (fréquence de changement de polarité de 50 kHz) sous une pression de 2 x 10-3 mbar (0,2 Pa), une puissance de 2000 W, avec 16 sccm d'Ar et 18 sccm de N₂ ;
- couche de SnO₂ à partir d'une cible de Sn, avec une alimentation à courant continu, sous une pression de 4 x 10-3 mbar (0,4 Pa), une puissance de 500 W, avec 30 sccm d'argon et 40 sccm d'oxygène ;
- couche de Zn:AlO déposée à partir d'une cible de Zn:Al (2% en poids d'aluminium), avec une alimentation en courant continu, sous une pression de 2 x 10⁻³ mbar (0,2 Pa), une puissance de 1500 W, 40 sccm d'Ar et 25 sccm d'O₂ ;
- couche de TiO₂ déposée à partir d'une cible de TiOx, avec une alimentation en courant continu, sous une pression de 2 x 10⁻³ mbar (0,2 Pa), une puissance de 2500 W, 50 sccm d'Ar et 3,0 sccm d'O₂;
- couche d'argent déposée à partir d'une cible de Ag, avec une alimentation en courant continu, sous une pression de 2 x 10-3 mbar (0,2 Pa), une puissance de 120 W, et 50 sccm d'argon ;
- couche de titane déposée à partir d'une cible de Ti, avec une alimentation en courant continu, sous une pression de 2 x 10-3 mbar (0,2 Pa), une puissance de 180 W, et 50 sccm d'argon ;
- couche de NiCr déposée à partir d'une cible de Ni₈₀Cr₂₀, avec une alimentation en courant continu, sous une pression de 2 x 10-3 mbar (0,2 Pa), une puissance de 200 W, et 50 sccm d'argon ;

Comme on peut le voir sur le tableau ci-dessous, l'influence du traitement de l'interface par une source ionique linéaire se traduit par une augmentation significative de la phase cristallisée au détriment de la phase amorphe de la couche de ZnO (orientation [0002]) et de l'argent (orientation [111]), montrant de ce fait que les propriétés cristallographiques de l'argent sont améliorées, ce qui est expérimentalement corrélé avec une diminution de la résistivité de la couche d'argent. Dans les exemples 1 à 5, la source ionique a été utilisée dans un mode de fonctionnement dit à haute énergie.

| Exemple | Couche A traitée par la source¹ | Trempe | Aire du pic de Bragg [0002] de ZnO² | Aire du pic de Bragg [111] de Ag³ | Résistance par carré (Ohm) |
|---|---|---|---|---|---|
| E.1 | - | Non | 13 | 48 | 5.0 |
| E.1 | TiO₂ | Non | 22 | 127 | 4.8 |
| E.2 | - | Non | 14 | 99 | 5.3 |
| E.2 | SnO₂ | Non | 19 | 161 | 5.1 |
| E.3 | - | Non | 7 | 13 | 7.7 |
| E.3 | - | Oui | 10 | 36 | 5.1 |
| E.3 | Si₃N₄ | Non | 16 | 30 | 7.4 |
| E.3 | Si₃N₄ | Oui | 23 | 68 | 4.6 |
| E.4 | - | Oui | 32 | 69 | 4.4 |
| E.4 | ZnO | Oui | 40 | 118 | 4.0 |

| | | | | | |
|---|---|---|---|---|---|
| ¹: traitement d'une couche oxyde: En utilisant l'argon comme gaz vecteur, on réalise les conditions de fonctionnement suivantes : tension et courant de décharge : 1060V et 141 mA, gaz vecteur : 23 sccm Ar, pression totale = 1 mtorr, Traitement d'une couche nitrure: conditions de fonctionnement de la source ionique : tension et courant de décharge : 1500 V et 190 mA, gaz vecteur : 50 sccm N₂, pression totale = 1 mTorr ²: l'aire indiquée est la somme des contributions des couches de ZnO de l'intégralité de l'empilement ³: dans le cas de l'exemple E.4 : l'aire indiquée est la somme des contributions des deux couches de Ag de l'intégralité de l'empilement | | | | | |

Ainsi, selon un cinquième mode de réalisation, le substrat comporte un revêtement de type à fonctionnalité photocatalytique.

A titre d'exemple de substrat revêtu de ce type d'empilement, on donne ci-après :
Exemple 5 : Substrat/SiO₂/BaTiO₃/TiO₂

La couche B est la couche en TiO₂, les couches Ai sont l'une au moins des couches situées en dessous de la couche B.

Les conditions de dépôt de l'empilement faisant l'objet de l'exemple 5 sont les suivantes :
- couche de SiO₂ à partir d'une cible Si:Al, avec une alimentation en mode pulsé (fréquence de changement de polarité de 30 kHz) sous une pression de 2 x 10-3 mbar 20 (0,2 Pa), une puissance de 2000 W, et 15 sccm d'Ar et sccm d'O₂;
- couche de BaTiO₃ à partir d'une cible de BaTiO₃, avec une alimentation radiofréquence, sous une pression de 2 x 10-3 mbar (0,2 Pa), une puissance de 500 W, et 50 sccm d'argon;
- couche de TiO₂ déposée à partir d'une cible de TiOₓ, avec une alimentation en courant continu, sous une pression de 20 x 10⁻³ mbar (2,0 Pa), une puissance de 2500 W, 200 sccm d'Ar et 2,5 sccm d'O₂

Comme on peut le voir sur le tableau ci-dessous, l'influence du traitement par faisceau d'ions sur les caractéristiques cristallographiques de la couche d'oxyde de titane ainsi que ses performances photocatalytiques avant et après un traitement de trempe

| Exemple 5 | Couche Ai traitée par la source | Trempe | Aire du pic de Bragg [101] de TiO₂ (u.a.) | Activité Photocatalytique détectée par test TAS (x 10-3cm-1. min-1) |
|---|---|---|---|---|
| E.5 | - | Non | 0,09 | 8 |
| E.5 | - | Oui | 0,60 | 28 |
| E.5 | BaTiO₃ | Non | 0,17 | 17 |
| E.5 | BaTiO₃ | Oui | 0,72 | 36 |

| | | | | |
|---|---|---|---|---|
| *Conditions de source ionique : Tension et courant de décharge : 1500V et 118 mA, gaz vecteur : 20 sccm Ar, pression totale = 1 mtorr | | | | |

Il est possible aussi d'utiliser la source ionique linéaire dans un mode de fonctionnement dit à basse énergie.

On donne ci-après une structure d'empilement (exemple 6) traité selon ce mode
Exemple 6 : traitement à basse énergie d'une couche de TiO₂

Empilement de type Substrat / SnO₂ / TiO₂ / ZnO / Ag /NiCr/ZnO/Si₃N₄/TiO₂

Comme on peut le voir dans le tableau ci-dessous, le traitement par source ionique à basse énergie (500 V) se traduit par une modification de la structure de la couche A, dans notre cas TiO₂. Le traitement permet en effet de générer des domaines cristallins de taille nanométrique au sein d'une couche auparavant amorphe. Cet effet se répercute sur la cristallisation de l'argent, expérimentalement corrélé avec une diminution de la résistivité de cette couche.

| Traitement couche TiO₂ | Structure TiO₂ | Taille cristallites TiO₂ | Résistance par carré (Ohm) |
|---|---|---|---|
| / | Amorphe | / | 5,5 |
| 500 V | nanocristallisée | 2 nm | 5,3 |

La taille des cristallites a été estimée en utilisant la relation de Scherrer en supposant que l'élargissement des pics mesurés en diffraction des rayons X est uniquement relié à la taille des domaines cristallisés (Les pics ont été simulés par une fonction de type Pseudo-voigt).

Ensuite, certains de ces substrats sont aptes à subir un traitement thermique (bombage, trempage, recuit) et sont destinés à être utilisés dans l'industrie automobile, notamment comme un toit-automobile, un vitrage latéral, un pare-brise, une lunette arrière, un rétroviseur, ou un vitrage simple ou double destiné au bâtiment, notamment un vitrage intérieur ou extérieur pour le bâtiment, un présentoir, comptoir de magasin pouvant être bombé, un vitrage de protection d'objet du type tableau, un écran anti-éblouissement d'ordinateur, un mobilier verrier ou comme tout substrat verrier, notamment transparent, d'une manière générale.

On donne ci-après les conditions opératoires permettant de mesurer l'activité photocatalytique par test TAS.

La mesure de l'activité photocatalytique est effectuée de la façon suivante :
- découpe d'échantillons de 5x5 cm²,
- nettoyage des échantillons pendant 45 minutes sous irradiation UV et sous balayage d'oxygène,
- mesure du spectre infrarouge par FTIR pour des nombres d'onde compris entre 4000 et 400 cm⁻¹, pour constituer un spectre de référence,
- dépôt de l'acide stéarique : 60 microlitres d'une solution d'acide stéarique dissout à raison de 5g/L dans du méthanol sont déposés par spin-coating sur l'échantillon,
- mesure du spectre infrarouge par FTIR, mesure de l'aire des bandes d'élongation des liaisons CH₂-CH₃ entre 3000 et 2700 cm⁻¹,
- exposition au rayonnement de type UVA : la puissance reçue par l'échantillon, respectivement d'environ 35 W/m² et 1,4 W/m² pour simuler l'exposition en extérieur ou en intérieur, est contrôlée par une cellule photoélectrique dans la gamme de longueurs d'onde 315-400 nm. La nature des lampes est également différente en fonction des conditions d'illumination : tubes fluorescents blanc chaud référence Philips T12 pour l'exposition intérieure, lampes UV Philips Cleo Performance pour l'exposition extérieure,
- suivi de la photodégradation de la couche d'acide stéarique après des durées d'exposition successives de 10 minutes par mesure de l'aire des bandes d'élongation des liaisons CH₂-CH₃ entre 3000 et 2700 cm⁻¹.
- l'activité photocatalytique en conditions extérieures kₑₓₜ est définie par la pente, exprimée en cm⁻¹.min⁻¹, de la droite représentant l'aire des bandes d'élongation des liaisons CH₂-CH₃ entre 3000 et 2700 cm⁻¹ en fonction de la durée d'exposition aux UV, pour une durée comprise entre 0 et 30 minutes.

## Revendications

1. Procédé de traitement de surface d'au moins une portion de surface d'une couche A présente dans un empilement de couches minces déposées sous vide sur un substrat en verre ou en matière plastique, ledit empilement comprenant ladite couche A et une couche B, ladite couche A étant située entre ladite couche B et ledit substrat, **caractérisé en ce que**:
- on procède au dépôt de la couche mince A au niveau d'une portion de surface dudit substrat, cette phase de dépôt étant réalisée par un procédé de dépôt sous vide,
- on génère, à l'aide d'au moins une source ionique linéaire, un plasma d'espèces ionisées à partir d'un gaz ou d'un mélange gazeux,
- on soumet au moins une portion de surface de la couche A audit plasma afin que ladite espèce ionisée modifie au moins partiellement l'état de surface de la couche A, de manière à modifier la cristallisation et/ou la morphologie granulaire de la couche B déposée ensuite, dans ledit empilement, au dessus de la couche A,
- on procède au dépôt d'au moins une couche B au niveau d'une portion de surface de la couche A, cette phase de dépôt étant réalisée par un procédé de dépôt sous vide.

2. Procédé de traitement selon la revendication 1, **caractérisé en ce que** la couche A comporte une pluralité de couches Ai superposées et **en ce que** l'on soumet au moins l'une des couches Ai, avec i compris entre 1 et n, n>=1, audit plasma.

3. Procédé de traitement de surface selon la revendication précédente, **caractérisé en ce que** le traitement de surface est réalisé par une ou plusieurs sources ioniques linéaires situées les unes à la suite des autres.

4. Procédé de traitement de surface selon l'une des revendications précédentes, **caractérisé en ce qu'**il est réalisé par une technique de type sputter up and down.

5. Procédé de traitement de surface selon l'une des revendications précédentes, **caractérisé en ce qu'**on positionne la source ionique linéaire dans le même compartiment contenant le dispositif de dépôt sous vide permettant le dépôt de la couche A.

6. Procédé de traitement de surface selon l'une des revendications 1 à 4, **caractérisé en ce qu'**on positionne la source ionique linéaire dans un compartiment isolé de celui contenant le dispositif de dépôt sous vide permettant le dépôt de la couche A

7. Procédé de traitement de surface selon l'une des revendications précédentes, **caractérisé en ce qu'**on positionne la source ionique linéaire selon un angle compris entre 30° et 90° par rapport au plan du substrat

8. Procédé de traitement de surface selon la revendication 1, **caractérisé en ce que** le procédé de dépôt consiste en un procédé de pulvérisation cathodique, notamment assistée par champ magnétique.

9. Procédé de traitement de surface selon la revendication 1, **caractérisé en ce que** le procédé de dépôt sous vide consiste en un procédé à base de PECVD.

10. Procédé de traitement de surface selon la revendication 1, **caractérisé en ce qu'**on utilise un plasma gazeux à base d'un gaz noble, d'oxygène, ou d'azote.

11. Procédé de traitement de surface selon la revendication 1, **caractérisé en ce que** la source ionique linéaire génère un faisceau collimaté d'ions d'énergie comprise entre 0,05 et 2,5 keV, préférentiellement comprise entre 1 et 2 keV.

12. Produit obtenu par la mise en oeuvre du procédé selon l'une quelconque des revendications 1 à 11, **caractérisé en ce qu'**il comporte un substrat pourvu d'un revêtement de couches multiples avec une forte réflexion pour le rayonnement thermique dont le revêtement est constitué d'au moins une séquence d'au moins cinq couches successives à savoir :
- une première couche à base d'oxyde métallique choisi notamment parmi l'oxyde d'étain, l'oxyde de titane,
- une couche d'oxyde métallique notamment à base d'oxyde de zinc déposée sur la première couche,
- une couche d'argent,
- une couche métallique choisie notamment parmi le nickel chrome, le titane, le niobium, le zirconium, déposée sur la couche d'argent et
- une couche supérieure comprenant un oxyde métallique ou semi-conducteur choisie notamment parmi l'oxyde d'étain, l'oxyde de zinc, ou l'oxyde de titane, déposée sur cette couche métallique.

13. Produit obtenu par la mise en oeuvre du procédé selon l'une quelconque des revendications 1 à 11, **caractérisé en ce que** le substrat est muni d'un empilement de couches minces comportant une alternance de n couches fonctionnelles B à propriétés de réflexion dans l'infrarouge et/ou dans le rayonnement solaire, à base notamment d'argent, et de (n + 1) revêtements A avec n ≥ 1, lesdits revêtements A comportant une ou une superposition de couches en matériau diélectrique à base notamment de nitrure de silicium, ou d'un mélange de silicium et d'aluminium, ou d'oxynitrure de silicium, ou d'oxyde de zinc, de manière à ce que chaque couche fonctionnelle B soit disposée entre deux revêtements A, l'empilement comprenant également des couches absorbantes dans le visible, notamment à base de titane, de nickel chrome, de zirconium, éventuellement nitrurées, situées au dessus et/ou en dessous de la couche fonctionnelle.

14. Produit obtenu par la mise en oeuvre du procédé selon l'une quelconque des revendications 1 à 11, **caractérisé en ce que** le substrat est muni d'un empilement de couches minces comportant une alternance de (n) couche(s) fonctionnelle(s) B à propriétés de réflexion dans l'infrarouge et/ou dans le rayonnement solaire, notamment de nature essentiellement métallique, et de (n + 1) couches A », avec n ≥ 1, ledit empilement étant composé d'une part, d'une ou d'une pluralité de couches dont au moins une en matériau diélectrique notamment à base d'oxyde d'étain, ou métallique, du nickel chrome, et d'autre part d'au moins une couche fonctionnelle en argent, ou en alliage métallique comportant de l'argent, la (chaque) couche fonctionnelle étant disposée entre deux couches en diélectrique.

15. Produit obtenu par la mise en oeuvre du procédé selon l'une quelconque des revendications 1 à 11, **caractérisé en ce qu'**il comporte un empilement de couches minces comportant au moins une séquence d'au moins cinq couches successives à savoir :
- une première couche notamment à base de nitrure de silicium,
- une couche notamment à base de nickel chrome ou de titane déposée sur la première couche,
- une couche fonctionnelle à propriétés de réflexion dans l'infrarouge et/ou dans le rayonnement solaire notamment à base d'argent,
- une couche métallique choisie notamment parmi le nickel chrome, le titane, le niobium, le zirconium, déposée sur la couche d'argent
- et une couche supérieure à base de nitrure de silicium déposée sur cette couche métallique.

16. Produit obtenu par la mise en oeuvre du procédé selon l'une quelconque des revendications 1 à 11, **caractérisé en ce que** le substrat est muni d'un empilement de couches minces à propriétés autonettoyantes comportant au moins une couche fonctionnelle comprenant du TiO₂ et une sous-couche barrière et à vocation hétéro-épitaxiale

17. Produit selon l'une quelconque des revendications 12 à 16, **caractérisé en ce qu'**il s'agit d'un substrat destiné à l'industrie automobile, notamment un toit-automobile, un vitrage latéral, un pare-brise, une lunette arrière, un rétroviseur, ou d'un vitrage simple ou double destiné au bâtiment, notamment d'un vitrage intérieur ou extérieur pour le bâtiment, d'un présentoir, comptoir de magasin pouvant être bombé, d'un vitrage de protection d'objet du type tableau, d'un écran anti-éblouissement d'ordinateur, d'un mobilier verrier.

18. Produit selon la revendication 17, **caractérisé en ce qu'**il est bombé.

## Patentansprüche

1. Verfahren zum Behandeln der Oberfläche mindestens eines Teils der Oberfläche einer Schicht A, die in einem Stapel aus Dünnschichten, die unter Vakuum auf einem Substrat aus Glas oder aus Kunststoff abgeschieden werden, vorhanden ist, wobei der Stapel die Schicht A und eine Schicht B umfasst, wobei sich die Schicht A zwischen der Schicht B und dem Substrat befindet, **dadurch gekennzeichnet, dass**
- das Abscheiden der Dünnschicht A im Bereich eines Teils der Oberfläche der Schicht A vorgenommen wird, wobei diese Phase des Abscheidens durch ein Vakuumabscheideverfahren realisiert wird,
- mit Hilfe mindestens einer linearen Ionenquelle ein Plasma aus ionisierten Spezies aus einem Gas oder einem gasförmigen Gemisch erzeugt wird,
- mindestens ein Teil der Oberfläche der Schicht A dem Plasma ausgesetzt wird, damit die ionisierte Spezies mindestens teilweise den Zustand der Oberfläche der Schicht A verändert, dergestalt, dass die Kristallisation und/oder die granulare Morphologie der Schicht B, die anschließend in dem Stapel oberhalb der Schicht A abgeschieden wird, verändert wird,
- das Abscheiden mindestens einer Schicht B im Bereich eines Teils der Oberfläche der Schicht A vorgenommen wird, wobei diese Phase des Abscheidens durch ein Vakuumabscheideverfahren realisiert wird.

2. Behandlungsverfahren nach Anspruch 1, **dadurch gekennzeichnet, dass** die Schicht A eine Vielzahl übereinander gelegter Schichten Ai aufweist, und dadurch, dass mindestens eine der Schichten Ai, wobei i zwischen 1 und n, n ≥ 1, beträgt, dem Plasma ausgesetzt wird.

3. Oberflächenbehandlungsverfahren nach vorhergehenden Anspruch, **dadurch gekennzeichnet, dass** die Oberflächenbehandlung durch eine oder mehrere lineare Ionenquellen realisiert wird, die sich hinter einander befinden.

4. Oberflächenbehandlungsverfahren nach dem einem der vorhergehenden Ansprüche, **dadurch gekennzeichnet, dass** es durch eine Technik vom Sputter-up-and-down-Typ realisiert wird.

5. Oberflächenbehandlungsverfahren nach einem der vorhergehenden Ansprüche, **dadurch gekennzeichnet, dass** die lineare Ionenquelle in dem gleichen Raum positioniert wird, der die Vakuumabscheidevorrichtung zum Abscheiden der Schicht A enthält.

6. Oberflächenbehandlungsverfahren nach einem der Ansprüche 1 bis 4, **dadurch gekennzeichnet, dass** die lineare Ionenquelle in einem Raum positioniert wird, der von dem isoliert ist, der die Vakuumabscheidevorrichtung zum Abscheiden der Schicht A enthält.

7. Oberflächenbehandlungsverfahren nach einem der vorhergehenden Ansprüche, **dadurch gekennzeichnet, dass** die lineare Ionenquelle in einem Winkel zwischen 30° und 90° relativ zu der Ebene des Substrats positioniert wird.

8. Oberflächenbehandlungsverfahren nach Anspruch 1, **dadurch gekennzeichnet, dass** das Abscheideverfahren in einem Kathodenzerstäubungsverfahren besteht, das insbesondere Magnetfeld-gestützt ist.

9. Oberflächenbehandlungsverfahren nach Anspruch 1, **dadurch gekennzeichnet, dass** das Vakuumabscheideverfahren in einem Verfahren auf PECVD-Basis besteht.

10. Oberflächenbehandlungsverfahren nach Anspruch 1, **dadurch gekennzeichnet, dass** ein gasförmiges Plasma auf Basis eines Edelgases, von Sauerstoff oder von Stickstoff verwendet wird.

11. Oberflächenbehandlungsverfahren nach Anspruch 1, **dadurch gekennzeichnet, dass** die lineare Ionenquelle ein Kollimationsbündel aus Ionen mit einer Energie zwischen 0,05 und 2,5 keV, vorzugsweise zwischen 1 und 2 keV, erzeugt.

12. Erzeugnis, das durch die Durchführung des Verfahrens nach einem der Ansprüche 1 bis 11 erhalten wird, **dadurch gekennzeichnet, dass** es ein Substrat aufweist, das mit einer Beschichtung aus mehreren Schichten mit einer hohen Reflexion für die Wärmestrahlung versehen ist, dessen Beschichtung aus mindestens einer Abfolge von mindestens fünf aufeinander folgenden Schichten besteht, und zwar:
- einer ersten Schicht auf Basis eines Metalloxids, das insbesondere aus Zinnoxid, Titanoxid ausgewählt ist,
- einer Schicht aus Metalloxid insbesondere auf Basis von Zinkoxid, die auf der ersten Schicht abgeschieden ist,
- einer Silberschicht,
- einer Metallschicht, die insbesondere aus Chrom-Nickel, Titan, Niobium, Zirkonium ausgewählt ist, die auf der Silberschicht abgeschieden ist,
- einer oberen Schicht, die ein Metalloxid oder einen Halbleiter, der insbesondere aus Zinnoxid, Zinkoxid oder Titanoxid ausgewählt ist, umfasst, die auf dieser Metallschicht abgeschieden ist.

13. Erzeugnis, das durch die Durchführung des Verfahrens nach einem der Ansprüche 1 bis 11 erhalten wird, **dadurch gekennzeichnet, dass** das Substrat mit einem Stapel aus Dünnschichten versehen ist, der eine Alternation von n Funktionsschichten B mit Reflexionsvermögen im Infrarotbereich und/oder im Bereich der Sonnenstrahlung, auf Basis insbesondere von Silber, und von (n + 1) Beschichtungen A mit n ≥ 1 aufweist, wobei die Beschichtungen A eine Schicht oder eine Übereinanderlegung von Schichten aus dielektrischem Material auf Basis insbesondere von Siliziumnitrid, oder eines Gemischs aus Silizium und Aluminium, oder von Siliziumoxinitrid, oder von Zinkoxid, aufweist, derart, dass jede Funktionsschicht B zwischen zwei Beschichtungen A angeordnet ist, wobei der Stapel ferner Schichten umfasst, die im sichtbaren Bereich absorbieren, insbesondere auf Basis von Titan, von Chrom-Nickel, von Zirkonium, die gegebenenfalls nitridiert sind und sich oberhalb und/oder unterhalb der Funktionsschicht befinden.

14. Erzeugnis, das durch die Durchführung des Verfahrens nach einem der Ansprüche 1 bis 11 erhalten wird, **dadurch gekennzeichnet, dass** das Substrat mit einem Stapel aus Dünnschichten versehen ist, der eine Alternation von (einer) Funktionsschicht(en) B mit Reflexionsvermögen im Infrarotbereich und/oder im Bereich der Sonnenstrahlung, insbesondere im Wesentlichen metallischer Beschaffenheit, und von (n + 1) Beschichtungen A mit n ≥ 1 aufweist, wobei der Stapel einerseits aus einer Schicht oder aus einer Vielzahl von Schichten, davon mindestens eine aus einem dielektrischem Material insbesondere auf Basis von Zinnoxid, oder einem metallischen Material, aus Chrom-Nickel, und andererseits aus mindestens einer Funktionsschicht aus Silber oder aus einer Metalllegierung, die Silber aufweist, besteht, wobei die [jede] Funktionsschicht zwischen zwei Schichten aus dielektrischem Material angeordnet ist.

15. Erzeugnis, das durch die Durchführung des Verfahrens nach einem der Ansprüche 1 bis 11 erhalten wird, **dadurch gekennzeichnet, dass** es einen Stapel aus Dünnschichten aufweist, der mindestens eine Abfolge von mindestens fünf aufeinander folgenden Schichten aufweist, und zwar:
- einer ersten Schicht insbesondere auf Basis von Siliziumnitrid,
- einer Schicht insbesondere auf Basis von Chrom-Nickel oder von Titan, die auf der ersten Schicht abgeschieden ist,
- einer Funktionsschicht mit Reflexionsvermögen im Infrarotbereich und/oder im Bereich der Sonnenstrahlung, insbesondere auf Basis von Silber,
- einer Metallschicht, die insbesondere aus Chrom-Nickel, Titan, Niobium, Zirkonium ausgewählt ist, die auf der Silberschicht abgeschieden ist, und
- einer oberen Schicht auf Basis von Siliziumnitrid, die auf dieser Metallschicht abgeschieden ist.

16. Erzeugnis, das durch die Durchführung des Verfahrens nach einem der Ansprüche 1 bis 11 erhalten wird, **dadurch gekennzeichnet, dass** das Substrat mit einem Stapel aus Dünnschichten mit Selbstreinigungsvermögen versehen ist, der mindestens eine Funktionsschicht, die TiO₂ enthält, und eine Untersperrschicht mit Heteroepitaxialbestimmung aufweist.

17. Erzeugnis nach einem der Ansprüche 12 bis 16, **dadurch gekennzeichnet, dass** es sich um ein Substrat handelt, das für die Kraftfahrzeugindustrie bestimmt ist, insbesondere ein Kraftfahrzeugdach, eine Seitenverglasung, eine Windschutzscheibe, ein Heckfenster, einen Rückspiegel, oder um eine Einfach- oder Doppelverglasung für Gebäude, insbesondere um eine Innen- oder Außenverglasung für Gebäude, um ein Präsentationssystem, Ladentheke, die gewölbt sein kann, um eine Objektschutzverglasung vom Typ Panel, um einen Blendschutzschirm für Computer, um ein Möbelstück aus Glas.

18. Erzeugnis nach Anspruch 17, **dadurch gekennzeichnet, dass** es gewölbt ist.

## Claims

1. A method for the surface treatment of at least one surface portion of at least one layer A located between a substrate and a layer B of a thin-film multilayer, the layers of which are vacuum-deposited on the substrate having a glass function, according to the invention, **characterized in that**:
- at least one thin layer A is deposited on a surface portion of said substrate, this deposition phase being carried out by a vacuum deposition process;
- using at least one linear ion source, a plasma of ionized species is generated from a gas or from a gas mixture;
- at least one surface portion of the layer A is subjected to said plasma so that said ionized species at least partly modifies the surface state of the layer A so that the crystallization and/or grain morphology of the layer of type B deposited afterwards on the layer A in the multilayer is modified; and
- at least one layer B is deposited on a surface portion of the layer A, this deposition phase being carried out by a vacuum deposition process.

2. The treatment method as claimed in claim 1, **characterized in that** the layer A comprises a plurality of superposed layers Aᵢ and **in that** at least one of the layers Aᵢ, where i is between 1 and n and n ≥ 1, is subjected to said plasma.

3. The surface treatment method as claimed in the preceding claim, **characterized in that** the surface treatment is carried out by one or more linear ion sources located one after another.

4. The surface treatment method as claimed in one of the preceding claims, **characterized in that** it is carried out using the sputter-up-and-down technique.

5. The surface treatment method as claimed in one of the preceding claims, **characterized in that** the linear ion source is positioned in the same compartment containing the vacuum deposition device for depositing the layer A.

6. The surface treatment method as claimed in one of claims 1 to 4, **characterized in that** the linear ion source is positioned in a compartment isolated from that containing the vacuum deposition device for depositing the layer A.

7. The surface treatment method as claimed in one of the preceding claims, **characterized in that** the linear ion source is positioned at an angle between 30° and 90° to the plane of the substrate.

8. The surface treatment method as claimed in claim 1, **characterized in that** the deposition process consists of a sputtering, especially magnetically enhanced or magnetron sputtering, process.

9. The surface treatment method as claimed in claim 1, **characterized in that** the vacuum deposition process consists of a PECVD-based process.

10. The surface treatment method as claimed in claim 1, **characterized in that** a gas plasma based on a noble gas, on oxygen or on nitrogen is used.

11. The surface treatment method as claimed in claim 1, **characterized in that** the linear ion source generates a collimated ion beam with an energy between 0.05 and 2.5 keV, preferably between 1 and 2 keV.

12. A substrate obtained by implementing the method as claimed in any one of claims 1 to 11, **characterized in that** the substrate is provided with a multilayer coating having a high reflection for thermal radiation, the coating of which consists of at least one sequence of at least five successive layers, namely:
- a first layer based on a metal oxide, especially chosen from tin oxide and titanium oxide;
- a layer of a metal oxide, especially one based on zinc oxide, deposited on the first layer;
- a silver layer;
- a metal layer chosen especially from nickel chromium, titanium, niobium and zirconium, deposited on the silver layer; and
- an upper layer comprising a metal oxide or semiconductor, especially chosen from tin oxide, zinc oxide and titanium oxide, deposited on this metal layer.

13. A substrate obtained by implementing the method as claimed in any one of claims 1 to 11, **characterized in that** the substrate is provided with a thin-film multilayer comprising an alternation of n functional layers B having reflection properties in the infrared and/or in solar radiation, especially based on silver, and of (n + 1) coatings A where n ≥ 1, said coatings A comprising a layer or superposition of layers of a dielectric based in particular on silicon nitride, or on a mixture of silicon and aluminum, or on silicon oxynitride, or on zinc oxide, so that each functional layer B is placed between two coatings A, the multilayer also including layers that adsorb in the visible, especially based on titanium, on nickel chromium or on zirconium, these layers being optionally nitrided and located above and/or below the functional layer.

14. A substrate obtained by implementing the method as claimed in any one of claims 1 to 11, **characterized in that** the substrate is provided with a thin-film multilayer comprising an alternation of n functional layers B having reflection properties in the infrared and/or in solar radiation, especially of essentially metallic nature, and of (n + 1) layers A, where n ≥ 1, said multilayer being composed, on the one hand, of one or more layers, including at least one layer made of a dielectric, especially based on tin oxide or metallic, or nickel chromium oxide, and, on the other hand, of at least one functional layer made of silver or of a metal alloy containing silver, the (each) functional layer being placed between two dielectric layers.

15. A substrate obtained by implementing the method as claimed in any one of claims 1 to 11, **characterized in that** it comprises a thin-film multilayer comprising at least one sequence of at least five successive layers, namely:
- a first layer, especially based on silicon nitride;
- a layer, especially based on nickel chromium or on titanium, deposited on the first layer;
- a functional layer having reflection properties in the infrared and/or in solar radiation, especially based on silver;
- a metal layer, especially chosen from nickel chromium, titanium, niobium and zirconium, on the silver layer; and
- an upper layer based on silicon nitride, deposited on this metal layer.

16. A substrate obtained by implementing the method as claimed in any one of claims 1 to 11, **characterized in that** the substrate is provided with a thin-film multilayer having self-cleaning properties, which includes at least one functional layer comprising TiO₂ and a barrier sublayer of heteroepitaxial purpose.

17. The substrate as claimed in any one of claims 12 to 16, **characterized in that** it is a substrate intended for the automobile industry, especially a sunroof, a side window, a windshield, a rear window or a rearview mirror, or single or double glazing for buildings, especially interior or exterior glazing for buildings, a store showcase or counter, which may be curved, glazing for protecting objects of the painting type, an antidazzle computer screen, or glass furniture.

18. The substrate as claimed in claim 17, **characterized in that** it is curved.
